# FASCICULE DE BREVET EUROPEEN

(11) **EP 0 493 171 B1**
(45) Date de publication et mention de la délivrance du brevet: **21.06.1995**
(21) Numéro de dépôt: 91403360.0
(22) Date de dépôt: 11.12.1991
(51) Int. Cl.: B21B 27/05

(54) **Installation de laminage de produits plats**
Anlage zum Walzen von flachen Produkten
Equipment for rolling flat products

(30) Priorité: 14.12.1990 FR 9015725
(43) Date de publication de la demande: 01.07.1992
(73) Titulaire: CLECIM, F-95864 Cergy-Pontoise Cédex (FR)
(72) Inventeur: Morel, Michel, F-77500 Chelles (FR); Ravenet, André, F-78130 Les Mureaux (FR)
(74) Mandataire: Phélip, Bruno

(56) Documents cités:
- EP-A- 0 178 233
- GB-A- 2 092 928
- US-A- 4 599 770

## Description

L'invention a pour objet une installation de laminage perfectionnée et est applicable, en particulier, aux trains de laminage à chaud de tôles ou de feuillards métalliques.

Un laminoir comprend, d'une façon générale, deux cylindres de laminage entre lesquels passe le produit à laminer et gui prennent appui respectivement, du côté opposé au produit, sur des cylindres d'appui. L'ensemble est monté à l'intérieur d'une cage fixe comprenant des moyens de serrage des cylindres, généralement par appui sur les extrémités d'au moins un cylindre d'appui, gui déterminent un certain écrasement du produit passant entre les cylindres de travail.

Dans les laminoirs de type "Quarto", chaque cylindre de travail s'appuie directement sur un cylindre d'appui alors que dans les laminoirs "Sexto", des cylindres intermédiaires sont interposés entre les cylindres de travail et les cylindres d'appui. Mais d'autres dispositions sont possibles.

Les laminoirs sont utilisés depuis très longtemps et ont fait l'objet de très nombreux perfectionnements, notamment pour corriger certains défauts du produit.

En effet, comme les efforts de serrage sont appliqués, par l'intermédiaire d'empoises, sur les extrémités des cylindres d'appui, ces derniers ont tendance à fléchir et les bords du produit risquent d'être plus écrasés que la partie centrale. En outre, après la sortie du laminoir, le produit laminé, qui n'est plus en tension, présente souvent des défauts de planéité, dûs à une répartition non homogène des contraintes sur la largeur du produit.

Pour corriger de tels défauts, on connait différents moyens qui permettent, notamment, de corriger le profil de l'entrefer et/ou la répartition des contraintes.

Par exemple, on peut modifier le profil d'au moins l'un des cylindres d'appui en utilisant des cylindres dits çonflables ou à enveloppe déformable.

Le document GB-A-2.092.928 décrit un dispositif de ce genre selon le préambule de la revendication 1 comprenant un arbre central calé en rotation, sur lequel est montée rotative une enveloppe tubulaire ayant une face interne et une face externe cylindriques. L'arbre central est muni d'une face cylindrique de diamètre égal, au jeu près, à celui de la face interne de l'enveloppe tubulaire et le long de laquelle sont ménagés des orifices écartés l'un de l'autre et alimentés en huile pour la formation d'un film lubrifiant continu entre l'arbre et l'enveloppe, chacun des orifices pouvant être alimenté sous une pression. réglable individuellement.

Il est ainsi possible de corriger la répartition des contraintes le long de la génératrice d'appui, mais cet effet de correction est transmis au produit par l'intermédiaire du cylindre de travail.

D'autre part, l'efficacité d'une telle disposition reste limitée car l'huile alimentée par chaque orifice se mélange immédiatement au film lubrifiant qui s'étend sur toute la longueur de l'arbre et réalise un équilibrage des pressions.

On peut également corriger le profil des cylindres de travail eux-mêmes. En effet, ces cylindres qui, généralement, sont constitués de rouleaux pleins, sont portés, en service, à une température assez élevée, et l'on a eu l'idée de jouer sur les dilatations relatives en associant à chaque cylindre de travail une rampe d'aspersion d'un fluide de refroidissement agissant de façon contrôlée sur des zones adjacentes réparties sur toute la longueur du cylindre. On peut ainsi modifier légèrement le diamètre du cylindre dans lesdites zones, mais les possibilités de réglage restent limitées.

On peut aussi exercer des efforts de cintrage, dans un sens ou dans l'autre, sur les deux extrémités de l'arbre du cylindre de travail, ce dernier étant muni d'empoises guidées, parallèlement au plan de serrage, dans les deux montants de la cage, et sur lesquelles des vérins permettent d'exercer des efforts verticaux, dans un sens ou dans l'autre. Un tel dispositif donne satisfaction et son usage s'est généralisé, mais il ne permet, cependant, pas un réglage précis et localisé de la répartition des contraintes sur la largeur du produit.

L'invention se propose d'apporter une solution à l'ensemble du problème grâce à des dispositions originales qui permettent d'agir directement sur au moins un cylindre de travail, c'est-à-dire le plus près possible du produit, en exerçant des actions localisées sur des zones adjacentes réparties sur toute la longueur du cylindre, de façon à régler de façon souple et précise la répartition des contraintes sur toute la largeur du produit.

L'invention s'applique donc, d'une façon générale, aux installations de laminage de produits plats comprenant une cage de support comportant deux montants écartés entre lesquels sont placés une pluralité de cylindres superposés, montés rotatifs autour d'axes sensiblement parallèles et entre lesquels est appliqué un effort de serrage pour le laminage d'un produit passant entre deux cylindres de travail, l'un au moins desdits cylindres comprenant une enveloppe tubulaire ayant une face interne et une face externe cylindriques, et montée rotative autour d'un arbre central calé en rotation et muni d'une face cylindrique, couvrant au moins un secteur angulaire, de diamètre sensiblement égal, au jeu près, à celui de la face interne de l'enveloppe tubulaire, et le long de laquelle sont ménagés des orifices écartés l'un de l'autre et reliés chacun par une conduite individuelle à des moyens de mise en circulation d'huile sous pression pour la formation d'un film d'huile entre la face cylindrique de l'arbre et la face interne de l'enveloppe, la pression d'huile au niveau de chacun des orifices pouvant être réglée individuellement pour l'application, sur la zone correspondante de l'enveloppe, d'un effort radial d'intensité réglable.

Conformément à l'invention, le cylindre équipé de coussinets espacés est l'un au moins des cylindres de travail du laminoir et la face cylindrique de l'arbre fixe est divisée en une suite de segments adjacents par une série de gorges circulaires placées de part et d'autre de chaque orifice d'alimentation en huile dans des plans espacés perpendiculaires à l'axe, chaque segment à face cylindrique compris entre deux gorges successives constituant un coussinet et lesdites gorges constituant des moyens d'isolement de chaque coussinet par rapport aux coussinets adjacents.

L'invention permet donc d'ovaliser l'enveloppe d'au moins un cylindre de travail per zones indépendantes réparties sur toute sa longueur et, ainsi, de réaliser des corrections de planéité et/ou de profil en travers du produit laminé.

D'autre part, l'arbre central peut avantageusement être muni de deux évidements longitudinaux divisant la face d'appui cylindrique en deux bandes cylindriques couvrant respectivement deux secteurs angulaires diamétralement opposés, et qui sont divisées par des gorges circulaires espacées de façon à ménager deux files de coussinets diamétralement opposées et centrées sensiblement sur le plan perpendiculaire au plan de passage du produit et passant par l'axe du cylindre. De préférence, les coussinets des deux files sont placés symétriquement de part et d'autre de l'axe de façon à former, le long de l'arbre central, une suite de paires de coussinets opposés deux à deux, les deux coussinets de chaque paire étant reliés à un moyen commun de réglace individuel, à un même niveau, de la pression du film d'huile dans lesdits coussinets.

Dans un mode de réalisation particulièrement avantageux, chaque coussinet forme un palier à effet hydrostatique et est relié à un circuit général d'alimentation en huile sous pression par une conduite individuelle débouchant par au moins un orifice de répartition de l'huile sur la face d'appui du coussinet et chaque conduite individuelle d'alimentation est associée à un moyen de réglage séparé de la pression du film d'huile le long de la face externe du coussinet.

Dans une application particulièrement intéressante, le réglage des pressions dans le film d'huile de chaque coussinet est effectué à partir de mesures effectuées directement sur le produit.

A cet effet, un tel cylindre peut être associé à un rouleau de contrôle de planéité muni, de façon connue, d'une série de capteurs de mesure de la répartition des contraintes dans des zones adjacentes échelonnées sur toute la largeur du produit laminé, de telle sorte que chaque zone du rouleau de contrôle corresponde à une zone couverte par un coussinet du cylindre et les pressions du film d'huile dans les différents coussinets sont réglées individuellement en fonction des indications données, respectivement, par les capteurs dans les zones correspondantes du rouleau de contrôle.

L'invention couvre également un mode de réalisation original d'un cylindre de laminage pour la mise en oeuvre des dispositions que l'on vient d'indiquer.

Généralement, en effet, un cylindre de travail de laminoir comprend une partie active cylindrique munie à chaque extrémité d'un tourillon tournant dans un roulement porté par une empoise guidée sur le montant correspondant de la cage et sur laquelle peuvent être appliqués des efforts de cintrage.

Dans un mode de réalisation particulier, selon l'invention, les deux extrémités du cylindre de travail ne sont pas montées de la même façon.

En effet, pour permettre un démontage facile du cylindre, l'enveloppe tubulaire comporte une extrémité ouverte permettant l'enfilement de l'arbre central et une extrémité fermée par un fond, l'arbre central s'étendant depuis une extrémité libre extérieure à l'enveloppe jusqu'à une extrémité interne placée à proximité du fond. Le cylindre de travail est alors guidé sur les deux montants de la cage, respectivement par des parties de guidage ménagées sur l'extrémité libre de l'arbre et par une empoise montée sur le fond de l'enveloppe et comportant une partie externe de guidage et une partie interne solidaire en rotation de l'enveloppe, cette dernière étant montée rotative sur l'arbre central autour de deux paliers placés respectivement sur l'extrémité libre de l'arbre, du côté de l'extrémité ouverte de l'enveloppe et sur l'extrémité interne de l'arbre, du côté du fond de fermeture de l'enveloppe.

Mais l'invention sera mieux comprise par la description suivante de certains modes de réalisation particuliers donnés à titre d'exemple et représentés sur les dessins annexés.

La Figure 1 représente schématiquement, en coupe axiale, un cylindre de travail muni des dispositions selon une forme de l'invention.

La Figure 2 est une vue partielle en perspective du cylindre.

La Figure 3 est une vue en coupe transversale d'un cylindre montrant un dispositif de réglage individuel de la pression dans un coussinet.

La Figure 4 est un schéma d'ensemble d'un laminoir équipé des dispositions selon un mode de réalisation de l'invention.

La Figure 5 est une vue en coupe transversale d'un autre mode de réglage individuel de la pression dans un coussinet.

La Figure 6 est une vue en coupe axiale d'un mode de réalisation perfectionné du cylindre de travail.

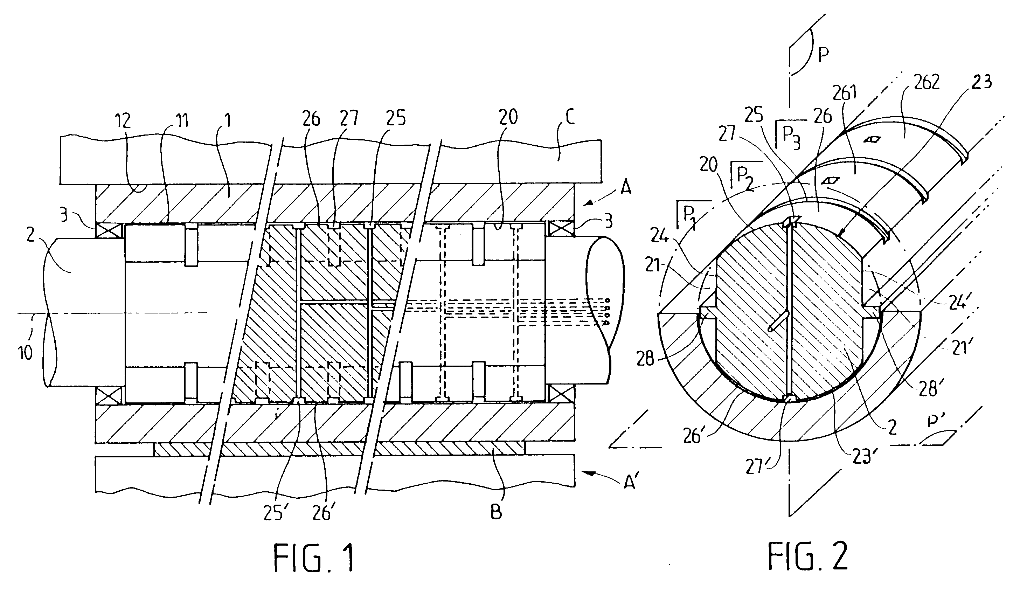

Sur la Figure 1, on a représenté, schématiquement, en coupe axiale, un cylindre de travail A délimitant, avec un cylindre associé A', un entrefer de passage d'un produit B à laminer et prenant appui, du côté opposé, sur un cylindre d'appui C.

Le cylindre de travail A est constitué d'une enveloppe tubulaire 1 ayant une forme cylindrique de révolution autour d'un axe 10 et présentant une face interne 11 et une face externe 12 cylindriques. L'enveloppe 1 est enfilée sur un arbre central fixe 2 autour duquel elle est montée rotative par l'intermédiaire de paliers 3 interposés entre les deux extrémités de l'enveloppe tubulaire 1 et des portées d'appui ménagées sur les deux extrémités de l'arbre central 2.

Comme on le voit plus en détail sur la Figure 2, l'arbre central 2 est muni d'une face cylindrique 20 de diamètre sensiblement égal à celui de la face interne 11 de l'enveloppe 1 en laissant simplement le jeu nécessaire à l'enfilement de l'enveloppe 1 sur l'arbre 2.

En outre, deux évidements 21, 21', sont ménagés sur l'arbre 2 de part et d'autre d'un plan de symétrie P, perpendiculaire au plan P' de passage du produit, c'est-à-dire du plan vertical passant par les axes des cylindres de travail et chaque évidement est limité par une face plane 24, 24', parallèle audit plan de serrage P. La face cylindrique 20 est ainsi divisée en deux bandes circulaires 23, 23', couvrant des secteurs angulaires diamétralement opposés centrés sur le plan P et séparés l'un de l'autre par les faces planes 24, 24'.

Chaque bande circulaire 23, 23', est divisée en une suite de segments 26, 26', par une série de gorges 25 en forme de secteurs circulaires, placées dans des plans espacés P1, P2, P3, ..., perpendiculaires à l'axe 10 de l'arbre 2 et creusées dans l'épaisseur de ce dernier, des gorges analogues 25' étant ménagées sur la bande cylindrique 23' opposée. Chaque bande 23, 23', est donc divisée en une rangée de segments 26, 26', ayant chacun la forme d'un rectangle courbe limité, dans le sens longitudinal, par deux gorges 25 successives et, dans le sens transversal, par les deux faces planes 24, 24'.

De préférence, mais de façon non limitative, les gorges 25, 25', ménagées respectivement sur les deux bandes opposées 23, 23', sont placées deux à deux dans un même plan P1 perpendiculaire à l'axe 10 de telle sorte que les segments correspondants sont disposés par paires de deux segments 26, 26', diamétralement opposés.

Pendant la rotation de l'enveloppe 1 autour de l'arbre 2, un fluide lubrifiant est mis en circulation entre les faces cylindriques 23, 23', de l'arbre 2 et la face interne 11 de l'enveloppe en formant un film lubrifiant. Ce film peut être réalisé soit de façon hydrodynamique, soit de façon hydrostatique. Dans le mode de réalisation représenté, chaque segment 26 est muni, dans sa partie centrale, d'un évidement 27 dans lequel débouche une conduite 71 reliée à un circuit 72 d'alimentation en fluide sous pression. De la sorte, l'huile introduite par la conduite 71 dans l'évidement 27 se répand sur toute la surface du segment 26 qui constitue ainsi un coussinet fonctionnant de façon analogue à un palier hydrostatique. D'ailleurs, l'évidement 27 a été représenté de façon symbolique sur la Figure 2, mais on pourrait, évidemment, utiliser des moyens connus pour la répartition de l'huile, par exemple par des rainures en pattes d'araignée.

Les gorges 25 qui séparent les coussinets 26 recueillent l'excès d'huile et l'évacuent vers les espaces 21, 21', limités par les faces planes 24, 24'. Chacune de celles-ci est avantageusement munie d'une cloison 28, 28', qui permet de limiter l'espace dans lequel se rassemble l'huile, celle-ci étant entraînée préférentiellement du côté aval dans le sens de rotation de l'enveloppe 1 par rapport à l'arbre 2. L'huile recueillie peut alors être évacuée par des moyens connus.

On voit donc que le film d'huile réparti sur chaque segment 26 est isolé des films recouvrant les segments adjacents 261, 262, par les gorges circulaires 25 et les faces planes 24, 24'. De la sorte, il est possible, en alimentant sous des pressions différentes les conduites 71 débouchant au centre de chaque segment 26, de placer les films d'huile sous des pressions différentes et, par conséquent, d'exercer sur les zones annulaires correspondantes de la face interne 11 de l'enveloppe, des efforts radiaux dont l'intensité peut être réglée individuellement par zone.

Ainsi, l'action de la pression entre les différents coussinets 26, 26' et l'enveloppe 1 a pour effet d'ovaliser cette dernière dans chaque zone recouvrant un coussinet et proportionnellement à la pression appliquée dans cette zone.

De la sorte, il est possible d'agir finement sur la répartition des contraintes appliquées sur le produit laminé par zones successives réparties sur toute la largeur de celui-ci et, ainsi, de réaliser des corrections de planéité et/ou de profil en travers.

A cet effet, les deux segments 26, 26' d'une même paire, compris entre deux plans successifs P1, P2, sont reliés par leurs conduites respectives 71, 71', à une même conduite d'alimentation commune 72 qui, comme on le verra plus loin, peut être munie d'un moyen individuel de réglage de la pression d'alimentation. De la sorte, les films d'huile recouvrant les deux segments diamétralement opposés 26, 26' , sont toujours placés à la même pression. Il en résulte que les efforts appliqués sur l'enveloppe 1 en prenant appui sur l'arbre 2 sont opposés et s'équilibrent. Un tel équilibrage étant obtenu de la même façon sur chaque zone de l'arbre 2 comprise entre deux plans successifs P1 et P2, l'application de ces efforts n'entraîne aucune flexion de l'arbre 2 et, inversement, l'effort de correction appliqué sur l'enveloppe 1 n'est pas perturbé par une flexion éventuelle de celui-ci due à d'autres causes.

Comme on l'a indiqué sur la Figure 2, chaque paire de segments 26, 26' étant alimentée par une conduite commune 72, l'arbre 2 est muni, dans sa partie centrale, d'une série de canalisations parallèles qui peuvent être, soit forées directement dans le métal, soit placées à l'intérieur d'un alésage central. Mais une telle réalisation ne présente pas de difficultés particulières et n'a donc pas à être décrite en détail. D'ailleurs, dans la mesure où l'arbre 2 est fixé en rotation, on pourrait aussi placer les conduites d'alimentation 62 dans les évidements 21.

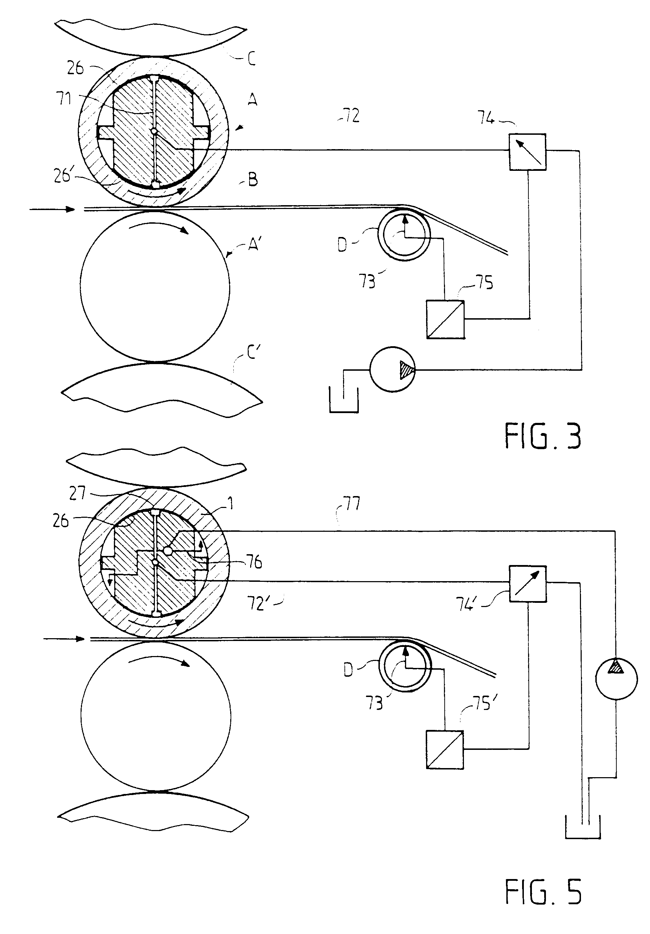

Sur la Figure 3, on a représenté, à titre d'exemple, un schéma hydraulique d'application à un laminoir de type Quarto comprenant deux cylindres de travail A, A', interposés entre deux cylindres d'appui C, C', et entre lesquels passe un produit B.

De façon classique, le laminoir est associé à un rouleau de contrôle de planéité D, placé à l'aval de la cage de laminage, et sur lequel le produit B est appliqué sous tension. Le rouleau C est muni d'une série de capteurs de mesure des contraintes appliquées par le produit, et répartis le long du rouleau C de façon à mesurer la répartition des contraintes dans des zones parallèles successives sur toute la largeur de la bande laminée B.

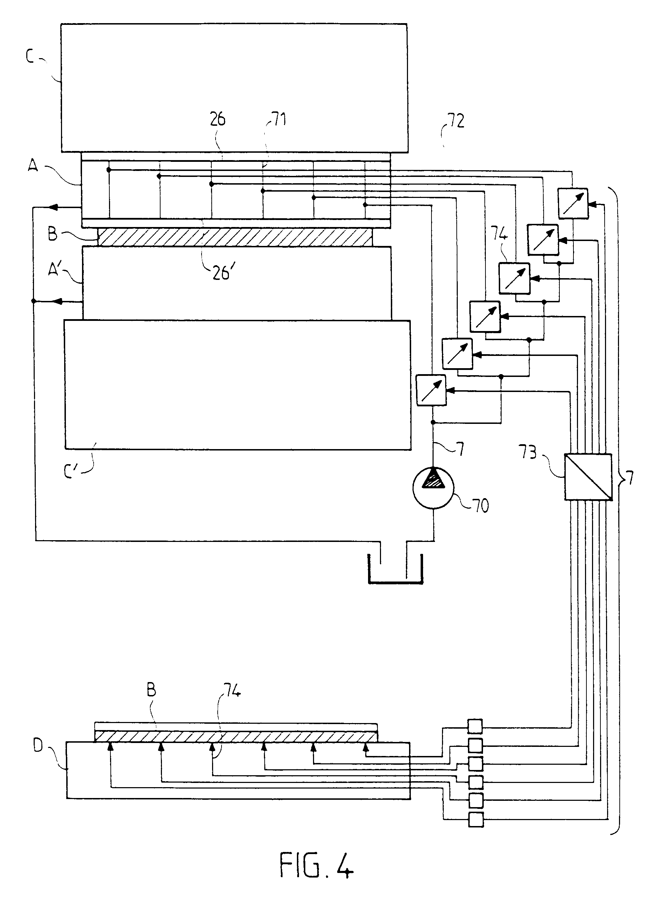

Le cylindre de travail comprenant, selon l'invention, une série de coussinets adjacents 26, 261, 262, etc..., chaque zone couverte par un coussinet peut, de façon particulièrement avantageuse, être associée à une zone couverte par un capteur du rouleau de planéité D de la façon représentée schématiquement sur le Figure 4. Un circuit d'alimentation générale 7 comportant une pompe 70 et, bien entendu, tous les organes nécessaires, distribue l'huile sous pression dans une pluralité de conduites 72 reliées chacune à une paire de coussinets 26, 26', opposés. L'huile qui s'échappe en aval du coussinet est récupérée et renvoyée à la bâche.

Chaque conduite d'alimentation commune est munie d'un régulateur individuel de pression 74.

Le rouleau de planéité D est muni lui-même d'une série de capteurs 73 répartis sur la longueur du rouleau de façon à correspondre chacun au niveau d'une paire de coussinets 26, 26'. Un système de régulation 75 agit sur les différents régulateurs 72 à partir des indications données par les capteurs 73. De la sorte, un défaut de planéité détecté par un ou plusieurs capteurs 73 peut être immédiatement corrigé en agissant sur les pressions exercées sur les zones correspondantes de l'enveloppe tubulaire 1. Bien entendu, le système de régulation 75 est progranmé de façon à tenir compte des interactions entre les zones et entre les cylindres de travail et le produit ainsi que, d'une façon générale, de tous les autres paramètres, notamment les corrections apportées par ailleurs en agissant, de façon connue, sur le profil des cylindres d'appui C, C', et sur le cintrage des cylindres de travail A, A'.

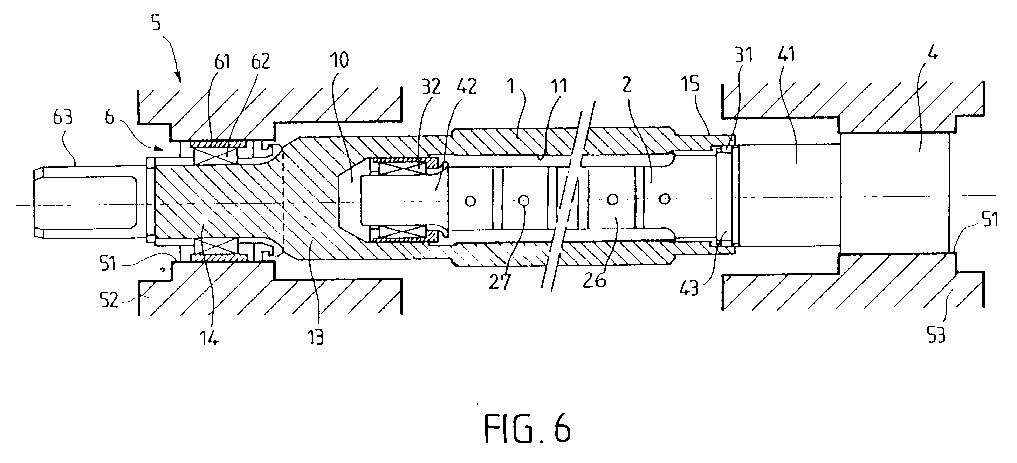

Mais le film d'huile qui doit être interposé entre chaque coussinet 26 et la face interne 11 de l'enveloppe tubulaire 1 peut également être réalisé par effet hydrodynamique. Par exemple, dans le mode de réalisation représenté très schématiquement sur la Figure 5, un circuit commun d'alimentation 77 est relié à une pluralité de conduites 76 débouchant chacune en amont de chaque coussinet 26 dans le sens de rotation de l'enveloppe 1. L'huile introduite ainsi à l'amont se répartit sur toute la surface du coussinet et s'échappe par l'aval en assurant la portance de l'enveloppe par effet de coin. Les deux coussinets opposés 26 d'une même paire sont munis chacun d'un évidement 27 constituant une prise de pression et relié à une conduite commune 72' par laquelle est prélevée une partie de l'huile circulant le long de chaque coussinet et qui fait retour à la bâche. Sur chaque conduite est placé un régulateur de pression 74'. Comme précédemment, dans le cas des Figures 3 et 4, le niveau de pression admis par chaque régulateur 74' est réglé par un système de régulation 75' en fonction des indications données par des capteurs 73 placés dans les zones correspondantes d'un rouleau de planéité D disposé en aval du laminoir. Il est ainsi possible de régler la pression dans le film d'huile en fonction des défauts de planéité éventuellement détectés par les capteurs 73.

Ainsi, les deux dispositions qui viennent d'être décrites permettent de corriger presque immédiatement et en agissant directement sur le produit les défauts de planéité dès qu'ils sont détectés.

Mais l'invention ne se limite évidemment pas au détail des modes de réalisation qui viennent d'être décrits, des variantes et des perfectionnements pouvant être imaginés.

En particulier, si l'invention a été décrite dans le cas d'un laminoir Quarto, elle peut évidemment s'appliquer à des laminoirs d'autres types, par exemple Sexto. En outre, le but essentiel de l'invention est d'agir directement sur les cylindres de travail pour régler la répartition des contraintes, mais il ne serait pas interdit d'appliquer les mêmes dispositions à d'autres cylindres.

Il est bien certain qu'un cylindre de travail selon l'invention est plus complexe qu'un cylindre de travail classique qui, généralement, est réalisé sous la forme d'un rouleau plein, mais les avantages importants apportés par l'invention compensent largement cet inconvénient.

D'ailleurs, le cylindre de travail qui vient d'être décrit n'a été représenté que schématiquement sur les Figures 1 et 2, dans un mode de réalisation simplifié, mais il peut aussi être perfectionné comme on l'a représenté, à titre d'exemple, sur la Figure 6.

En effet, il est souvent nécessaire, dans les laminoirs, de relier chaque cylindre de travail à un moyen d'entrainement en rotation et, en outre, de prévoir une possibilité de démontage du cylindre pour réparation ou remplacement. C'est ce que permet la disposition de la Figure 6.

Généralement, un cylindre de laminoir est monté rotatif sur deux tourillons, placés à ses extrémités, et tournant chacun dans une empoise guidée, parallèlement au plan de serrage, dans une fenêtre ménagée sur le montant correspondant de la cage du laminoir. C'est sur l'empoise que sont appliqués, le cas échéant, des efforts verticaux pour le cintrage du cylindre.

Comme on le voit sur la Figure 6, le cylindre selon l'invention est associé, sur un seul côté, à une empoise classique 6 montée coulissante dans une fenêtre 51 de l'un des montants 52 de la cage 5 et dans laquelle est monté rotatif, de façon classique, un tourillon 14 de support du cylindre et ce dernier est guidé, à son autre extrémité, par un organe de support 4 fixe en rotation et monté coulissant dans la fenêtre 51 du second montant 53 de la cage 5.

En effet, pour permettre le démontage du cylindre, l'enveloppe tubulaire 1 est ouverte à l'une de ses extrémités 15 et fermée à son autre extrémité par un flasque 13 dans l'axe duquel est fixé un tourillon 14.

L'enveloppe tubulaire 1 comprend ainsi un espace interne borgne 10 limité par la face interne 11 de l'enveloppe et fermé d'un seul côté par le fond 13 et dans lequel peut être enfilé axialement l'arbre 2 qui, en service, s'étend ainsi à l'intérieur du logement 10 entre une extrémité libre 41 et une extrémité interne 42 placée à proximité du fond 13 de l'espace interne 10.

L'arbre central 2 étant fixe en rotation, son extrémité libre 41 est fixée sur l'organe de support 4 guidé dans la fenêtre 51 du montant 53 de la cage 5.

Comme précédemment, l'enveloppe tubulaire 1 est centrée sur l'arbre 2 par deux paliers à roulements 31, 32.

Le palier 31 est monté entre une portée cylindrique 43 ménagée sur l'arbre central 2 et l'extrémité 15 de l'enveloppe 1.

Le palier 32 est placé à l'extrémité opposée de l'espace interne 10, près du fond 13 de l'enveloppe 1 et est interposé entre la face interne 11 de celle-ci et un tourillon 42 ménagé sur l'extrémité interne de l'arbre 2.

Par ailleurs, l'empoise 6 comprend elle-même un boîtier 61 guidé dans la fenêtre 51 du montant 52 de la cage et sur lequel prend appui la cage externe d'un palier 62 dont la cage interne est montée sur le tourillon 14 fixé sur de fond 13 de l'enveloppe 1 fermant l'espace interne 10.

Le tourillon 14 est d'autre part prolongé par une partie d'entraînement 63 sur laquelle peut s'engager un moyen de commande de rotation non représenté.

On voit donc que l'enveloppe tubulaire 1 est centrée sur l'arbre 2 par les deux paliers 31, 32, et guidée par rapport à la cage 5 du laminoir, à une extrémité par l'empoise 6 et à son autre extrémité par l'organe de guidage fixe 4 qui, associé au palier 31, joue le même rôle qu'une empoise.

L'enveloppe tubulaire 1 étant ainsi solidarisée axialement avec l'arbre 2 par les deux paliers 31 et 32, l'ensemble peut être soumis à des efforts de cintrage appliqués sur les deux extrémités du cylindre par des vérins prenant appui respectivement sur l'empoise 6 et sur la pièce de guidage 4. Ces efforts de cintrage du cylindre ne perturbent pas la correction des défauts de planéité, l'arbre 2 étant, à cet effet, toujours soumis à des efforts opposés, comme on l'a indiqué plus haut.

## Revendications

1. Installation de laminage d'un produit plat comprenant une cage de support comportant deux montants écartés (5) entre lesquels sont placés une pluralité de cylindres superposés, montés rotatifs autour d'axes sensiblement parallèles et entre lesquels est appliqué un effort de serrage, pour le laminage d'un produit (B) passant entre deux cylindres de travail (A) (A'), l'un au moins desdits cylindres comprenant une enveloppe tubulaire (1) ayant une face interne (11) et une face externe (12) cylindriques, et montée rotative autour d'un arbre central (2) calé en rotation et muni d'une face d'appui cylindrique (20), couvrant au moins un secteur angulaire, de diamètre sensiblement égal, au jeu près, à celui de la face interne (11) de l'enveloppe tubulaire (1), et le long de laquelle sont ménagés des orifices (27) écartés l'un de l'autre et reliés chacun par une conduite individuelle (71) à des moyens (7) de mise en circulation d'huile sous pression pour la formation d'un film d'huile entre la face cylindrique (20) de l'arbre (2) et la face interne (11) de l'enveloppe (1), la pression d'huile au niveau de chacun des orifices (27) pouvant être réglé individuellement pour l'application, sur la zone correspondante de l'enveloppe (1), d'un effort radial d'intensité réglable,
caractérisée par le fait que le cylindre équipé de coussinets espacés (26) est l'un au moins des cylindres de travail (A) du laminoir, et que la face d'appui cylindrique (20) de l'arbre fixe (2) est divisée en une suite de segments adjacents (26) par une série de gorges circulaires (25) placées de part et d'autre de chaque orifice (27) d'alimentation en huile dans des plans espacés (P1, P2, ...) perpendiculaires à l'axe, chaque segment à face cylindrique compris entre deux gorges successives (25) constituant un coussinet (26) et lesdites gorges (25) constituant des moyens d'isolement de chaque coussinet (26) par rapport aux coussinets adjacents (261).

2. Installation de laminage selon la revendication 1, dans laquelle l'arbre (2) est muni de deux évidements longitudinaux (21) (21') divisant la face d'appui cylindrique (20) de l'arbre (2) en deux bandes cylindriques (23) (23') couvrant, respectivement, deux secteurs angulaires diamétralement opposés,
caractérisée par le fait que chacune desdites bandes cylindriques (23, 23') est divisée par des gorges circulaires (25) espacées de façon à ménager deux files de coussinets (26, 26') diamétralement opposées et centrées sensiblement sur le plan (P) perpendiculaire au plan (P') de passage du produit et passant par l'axe (10) du cylindre (A).

3. Installation de laminage selon la revendication 2 , caractérisée par le fait que les coussinets des deux files sont répartis symétriquement de part et d'autre de l'axe, de façon à former, le long de l'arbre central, une suite de paires de coussinets (26, 26') opposés deux à deux, les deux coussinets (26, 26') de chaque paire étant reliés à un moyen commun (74) de réglage individuel, à un même niveau, de la pression du film d'huile dans lesdits coussinets.

4. Installation de laminage selon l'une des revendications précédentes, caractérisée par le fait que chaque coussinet (26) forme un palier à effet hydrostatique, et est relié à un circuit général (7) d'alimentation en huile sous pression par une conduite individuelle (71) débouchant par au moins un orifice (27) sur la face externe (26) du coussinet et que chaque conduite individuelle d'alimentation (71) est associée à un moyen (74) de réglace séparé de la pression du film d'huile dans le coussinet.

5. Installation de laminage selon l'une des revendications 1 à 4, caractérisée par le fait que chaque coussinet (26) forme un palier à effet hydrodynamique, le cylindre étant associé à des moyens (76, 77) de mise en circulation de l'huile le long de la face d'appui cylindrique de chaque coussinet (26) entre l'extrémité amont et l'extrémité aval, et que les moyens de réglage de la pression du film d'huile comprennent, pour chaque coussinet, au moins un orifice (27) de prise de pression débouchant dans la face d'appui (26) et sur lequel est branchée une conduite (72, 72') de récupération d'au moins une partie de l'huile circulant le long de la face d'appui (26), reliée à un circuit de retour d'huile, chaque conduite de récupération étant munie d'un organe individuel (74') de réglage de la pression de l'huile.

6. Installation de laminage selon l'une des revendications précédentes, caractérisée par le fait que le réglage des pressions du film d'huile dans les coussinets (26) permet de réaliser des corrections de planéité et/ou de profil en travers du produit laminé (B) à partir de mesures effectuées sur le produit (B).

7. Installation de laminage selon la revendication 6, caractérisée par le fait qu'il est associé à un rouleau de contrôle de planéité (D) muni d'une série de capteurs (73) de mesure de la répartition des contraintes dans des zones adjacentes échelonnées sur toute la largeur du produit laminé de telle sorte que chaque zone du rouleau de contrôle (D) corresponde à une zone couverte par un coussinet (26) du cylindre (A) et que les pressions du film d'huile dans les coussinets (26) sont réglées individuellement en fonction des indications données, respectivement, par les capteurs (73) dans les zones correspondantes du rouleau de contrôle (D).

8. Installation de laminage selon l'une des revendications précédentes, caractérisée par le fait que l'enveloppe tubulaire (1) comporte une extrémité ouverte (15) pour permettre l'enfilement de l'arbre central (2) et une extrémité fermée par un fond (13), l'arbre central (2) s'étendant depuis une extrémité libre (41) extérieure à l'enveloppe (1) jusqu'à une extrémité interne (42) à proximité du fond (13), et que le cylindre de travail (2) est guidé sur les deux montants (52, 53) de la cage (5), respectivement par des parties de guidage (4) ménagées sur l'extrémité libre (41) de l'arbre (2) et par une empoise montée (6) sur un tourillon (14) fixé sur le fond (13) de l'enveloppe (1) et comportant une partie externe de guidage (61) et une partie interne solidaire en rotation de l'enveloppe, cette dernière étant montée rotative sur l'arbre central (2) autour de deux paliers (31) (32) placés respectivement sur l'extrémité libre (41) de l'arbre (2), du côté de l'extrémité ouverte (15) de l'enveloppe (1) et sur l'extrémité interne (42) de l'arbre (2) du côté du fond (13) de fermeture de l'enveloppe (1).

## Claims

1. An installation for rolling a flat product, comprising a support stand having two spaced uprights (5) between which is placed a plurality of superposed rolls mounted rotatably about substantially parallel axes and between which a squeezing force is applied in order to roll a product (B) passing between two work rolls (A) (A'), one at least of said rolls comprising a tubular jacket (1) having a cylindrical inner face (11) and a cylindrical outer face (12) and mounted rotatably about a central shaft (2) which is wedged in rotation and provided with a cylindrical bearing face (20) covering at least one angular sector with a diameter substantially equal, taking into account the clearance, to the one of the inner face (11) of the tubular jacket (1) and along which are provided orifices (27) spaced one another and each connected by an individual duct (71) to means (7) for placing pressurized oil in circulation in order to form an oil film between the cylindrical face (20) of the shaft (2) and the inner face (11) of the jacket (1), the oil pressure at the level of each orifice (27) being liable to be individually adjusted for the application on a corresponding area of the jacket (1) of a radial stress with an adjustable force,
characterized in that the roll provided with spaced bushes (26) is at least one of the work rolls (A) of the installation for rolling and in that the cylindrical bearing face (20) of the fixed shaft (2) is divided into a sequence of adjacent segments (26) by a plurality of circular grooves (25) located On each side of each oil feeding orifice (27) in spaced planes (P1, P2, ...) perpendicular to the axis, each segment with a cylindrical face comprised between two successive grooves (25) Constituting a bush (26) and said grooves (25) constituting isolating means for each bush (26) with regard to the adjacent bushes (261).

2. The rolling installation according to claim 1 in which the shaft (2) is provided with two longitudinal recesses (21) (21') dividing the cylindrical bearing face (20) of the shaft (2) into two cylindrical strips (23) (23') covering respectively two diametrically opposed angular sectors,
characterized in that each said cylindrical strip (23, 23') is divided by circular grooves (25) spaced to provide two rows of bushes (26, 26') diametrically opposed and essentially centered on the plane (P) perpendicular to the plane (P') of the product passage and passing through the axis (10) of the roll (A).

3. The rolling installation according to claim 2, characterized in that the bushes of two rows are distributed symmetrically on each side of the axis so as to form, along the central shaft, a sequence of pairs of two opposed bushes (26, 26') the two bushes (26, 26') of each pair being connected to a common means (74) for individual adjustment, at the same level, of the pressure of the oil film in said bushes.

4. The rolling installation according to any one of the preceding claims, characterized in that each bush (26) forms a bearing with a hydrostatic effect and is connected to a general pressurized-oil-feed circuit (7) via an individual duct (71) opening out via at least one orifice (27) on the outer face (26) of the bush, and in that each individual feed duct (71) is associated with a means (74) for separate adjustment of the pressure of the oil film in the bush.

5. The rolling installation according to any one of claims 1 to 4, characterized in that each bush (26) forms a bearing with hydrodynamic effect, the roll being associated with means (76, 77) for placing the oil in circulation along the cylindrical bearing face of each bush (26) between the upstream end and the downstream end, and in that means for adjusting the pressure of the oil film comprise, for each bush, at least one orifice (27) for pressure tapping opening out in the bearing face (26) and on which is connected a duct (72, 72') for recovering at least a part of the oil circulating along the bearing face (26), connected to an oil-return circuit, each recovery duct being equipped with an individual element (74') for adjusting the pressure of the oil.

6. The rolling installation according to any one of the preceding claims, characterized in that the adjustment of the pressures of the oil film in the bushes (26) makes it possible to perform corrections of flatness and/or of cross-profile to the rolling direction of the rolled product (B) on the basis of measurements performed on the product (B).

7. The rolling installation according to claim 6, characterized in that it is associated with a flatness-control roller (D) equipped with a series of sensors (73) for measuring the distribution of the stresses in adjacent zones staggered over the entire width of the rolled product, such that each zone of the control roller (D) corresponds to a zone covered by a bush (26) of the roll (A), and in that the pressures of the oil film in the bushes (26) are adjusted individually as a function of the indications given, respectively, by the sensors (73) in the corresponding zones of the control roller (D).

8. The rolling installation according to any one of the preceding claims, characterized in that the tubular jacket (1) comprises an open end (15) for permitting slipping over the central shaft (2) and an end closed by a backplate (13), the central shaft (2) extending from a free end (41) outside the jacket (1) as far as an inner end (42) in the vicinity of the backplate (13), and in that the work roll (A) is guided on the two uprights (52, 53) of the stand (5), respectively by guide parts (4) provided on the free end (41) of the shaft (2) and by a chock (6) mounted on a journal (14) fixed on the backplate (13) of the jacket (1) and comprising an outer guide part (61) and an inner part which is integral in rotation with the jacket, the latter being mounted rotatably on the central shaft (2) about two bearings (31) (32) placed, respectively, on the free end (41) of the shaft (2), on the side of the open end (15) of the jacket (1), and on the inner end (42) of the shaft (2) on the side of the closure backplate (13) of the jacket (1).

## Patentansprüche

1. Anlage zum Walzen von Flachzeug bestehend aus einem Stützgerüst mit zwei im Abstand angeordneten Walzständern, zwischen denen mehrere übereinander gelagerte, um im wesentlichen parallele Achsen drehbar montierte Walzen angeordnet sind und zwischen denen eine Anstellkraft zum Walzen eines zwischen zwei Arbeitswalzen (A) (A') durchlaufenden Erzeugnisses (B) beaufschlagt wird, wobei mindestens eine dieser Walzen einen rohrförmigen Mantel (1) mit einer zylindrischen Innen- (11) und Aussenfläche (12) aufweist, der um eine drehfest verkeilte Mittelwelle (2) drehbar montiert ist, die eine zylindrische, mindestens einen Winkelsektor abdeckende Auflagefläche (20) mit einem im wesentlichen dem Durchmesser der Innenfläche (11) des rohrförmigen Mantels (1) gleichen Durchmesser aufweist, und entlang dessen im Abstand voneinander angeordnete Öffnungen (27) vorgesehen sind, die jeweils über eine separate Leitung (71) an Druckölumlaufmittel (7) zur Ölfilmbildung zwischen der zylindrischen Fläche (20) der Welle (2) und der Innenfläche (11) des Mantels (1) angeschlossen sind, wobei der Öldruck an den jeweiligen Öffnungen (27) separat einstellbar ist zwecks Beaufschlagen einer radialen, intensitätsmässig einstellbaren Kraft auf die entsprechende Zone des Mantels (1), dadurch gekennzeichnet, dass die mit im Abstand angeordneten Lagern (26) ausgerüstete Walze mindestens eine der Walzwerk-Arbeitswalzen (A) ist, und dass die zylindrische Auflagefläche (20) der feststehenden Welle (2) durch eine Anzahl Ringnuten (25) in aufeinanderfolgende nebeneinander liegende Segmente (26) aufgeteilt ist, die sich beiderseits einer jeden Ölversorgungsöffnung (27) in im Abstand gelagerten senkrecht zur Achse angeordneten Ebenen (P1, P2, ...) befinden, wobei jedes durch zwei aufeinanderfolgende Nuten (25) eingeschlossene Segment mit zylindrischer Fläche als Lager (26) ausgebildet ist und diese Nuten (25) Absperrmittel für das jeweilige Lager (26) gegenüber den benachbarten Lager (261) bilden.

2. Walzanlage nach Anspruch 1, in welcher die Welle (2) zwei längsverlaufende Aussparungen (21) (21') aufweist, welche die zylindrische Auflagefläche (20) der Welle (2) in zwei diametral entgegengesetzte Winkelsektoren abdeckende zylindrische Bänder (23) (23') aufteilen, dadurch gekennzeichnet, dass jedes dieser zylindrischen Bänder (23, 23') durch im Abstand angeordnete Ringnuten (25) so aufgeteilt ist, dass zwei Reihen diametral entgegengesetzter Lager (26, 26') gebildet werden, die im wesentlichen symetrisch zur senkrecht zur Produktdurchlaufebene (P') angeordneten und durch die Achse (10) der Walze (A) verlaufenden Ebene (P) ausgerichtet sind.

3. Walzanlage nach Anspruch 2, dadurch gekennzeichnet, dass die Lager der beiden Reihen beiderseits der Achse symmetrisch derart verteilt sind, dass sie entlang der Mittelwelle eine Folge von paarweise entgegensetzten Lagern (26, 26') bilden, wobei die Lager (26, 26') des jeweiligen Paares an ein gemeinsames Mittel (74) mit separater Einstellung derselben Druckhöhe des Ölfilms in diesen Lagern angeschlossen sind.

4. Walzanlage nach einem der vorangehenden Ansprüche, dadurch gekennzeichnet, dass jedes als hydrostatisches Lager ausgebildete Lager (26) an einen gemeinsamen Versorgungskreis (7) mit Drucköl über eine separate Leitung (71) angeschlossen ist, die an der Aussenfläche (26) des Lagers durch mindestens eine Öffnung (27) mündet, und dass jeder einzelnen Versorgunsleitung (71) ein Mittel (74) mit getrennter Druckeinstellung des Ölfilms in dem Lager zugeordnet ist.

5. Walzanlage nach einem der Ansprüche 1 bis 4, dadurch gekennzeichnet, dass jedes Lager (26) als hydrodynamisches Lager ausgebildet ist, wobei der Walze Mittel (76, 77) zum Ölumlauf entlang der zylindrischen Auflagefläche eines jeden Lagers (26) zwischen dem Ein- und Auslaufende zugeordnet sind, und dass die Druckeinstellmittel des Ölfilms für jedes Lager mindestens eine in die Auflagefläche mündende Druckzapföffnung (27) aufweisen, die an eine mit einem Ölrücklaufkreis verbundene Leitung (72, 72') zur Rückgewinnung mindestens eines Teils des entlang der Auflagefläche (26) umlaufenden Öles angeschlossen ist, wobei jede Rückgewinnungsleitung ein separates Element (74') zur Öldruckeinstellung aufweist.

6. Walzanlage nach einem der vorangehenden Ansprüche, dadurch gekennzeichnet, dass die Ölfilm-Druckeinstellungen in den Lagern (26) Planheits- und Querprofilkorrekturen am gewalzten Erzeugnis (B) durch am Produkt durchgeführte Messungen erlauben.

7. Walzanlage nach Anspruch 6, dadurch gekennzeichnet, dass der Arbeitswalze eine Planheitskontrollrolle (D) mit einer Anzahl Fühler (73) zum Messen der Spannungsverteilung in den benachbarten über die Walzerzeugnisbreite gestaffelten Zonen derart zugeordnet ist, dass jede Zone der Kontrollrolle (D) einer durch ein Lager (26) der Walze (A) abgedeckten Zone entspricht, und dass die Ölfilmdrücke in den Lagern (26) entsprechend den durch die Messfühler (73) in den entsprechenden Zonen der Kontrollrolle (D) gelieferten Angaben einzeln eingestellt werden.

8. Walzanlage nach einem der vorangehenden Ansprüche, dadurch gekennzeichnet, dass der rohrförmige Mantel (1) ein offenes Ende (15) zum Einführen der Mittelwelle (2) und ein durch einen Boden (13) geschlossenes Ende aufweist, wobei die Mittelwelle (2) sich von einem aussen am Mantel (1) befindlichen freien Ende bis zu einem bei dem Boden (13) befindlichen Innenende (42) erstreckt, und dass die Arbeitswalze an den beiden Ständern (52, 53) des Walzgerüstes (5) jeweils durch am freien Ende (41) der Welle (2) angeordnete Führungsteile (4) bzw. durch ein Einbaustück (6) geführt wird, das auf einem am Boden (13) des Mantels (1) befestigten Drehzapfen (14) montiert ist, und die aus einem externen Führungsteil (61) und einem mit dem Mantel drehfest verbundenen internen Teil bestehen, wobei letzteres auf der Mittelwelle (2) um zwei Lager (31) (32) drehbar montiert ist, die sich jeweils am freien Ende (41) der Welle (2) auf der Seite des offenen Endes (15) des Mantels (1) und am internen Ende (41) der Welle (2) auf der Seite des den Mantel (1) schliessenden Bodens (13) befinden.
